# EUROPÄISCHE PATENTANMELDUNG

(11) **EP 1 172 453 A2**
(43) Veröffentlichungstag der Anmeldung: **16.01.2002**
(21) Anmeldenummer: 01113865.8
(22) Anmeldetag: 07.06.2001
(51) Int. Cl.: C23C 4/18

(54) **Verfahren zur Herstellung eines endkonturnahen Formgebungswerkzeuges und danach hergestelltes Formgebungswerkzeug**

(30) Priorität: 15.07.2000 DE 10034508
(71) Anmelder: Schott Glas, 55122 Mainz (DE); CARL-ZEISS-STIFTUNG trading as SCHOTT GLAS, 55122 Mainz (DE)
(72) Erfinder: Herzbach, Lars Christian, 64331 Weiterstadt (DE); Thiel, Steffen, 55286 Wörrstadt (DE)
(74) Vertreter: Fuchs Mehler Weiss & Fritzsche

(57) **Zusammenfassung**

Derartige Formgebungswerkzeuge besitzen typischerweise eine formgebende, strukturierte Oberfläche, die eine hohe Oberflächengüte und Gefügehomogenität aufweisen muß, damit sich allein die vorgegebene Struktur in dem Substrat abbildet.

Die bekannten Verfahren haben den Nachteil, daß sie einen hohen Bearbeitungsaufwand erfordern, weil die Endkonturen aus zunächst durch Schmiede- oder HIP-Prozesse hergestellten Blöcken bzw. Rundmaterialien nachträglich mechanisch herausgearbeitet werden müssen. Diesen Nachteil vermeidet die Erfindung, indem zunächst eine Form (1) hergestellt wird, in die das Negativ der zu strukturierenden Oberfläche eingearbeitet wird, diese Negativform (1) dann vorzugsweise durch Thermisches Spritzen mit einem vorgegebenen Werkstoff beschichtet wird, der so hergestellte Schichtkörper (2) dann von der Negativform (1) abgelöst und mit einem Basiswerkstoff zur formgebenden strukturierten Oberfläche des Formgebungswerkzeuges verbunden wird.

## Beschreibung

Die Erfindung bezieht sich auf ein Verfahren zur Herstellung eines endkonturnahen Formgebungswerkzeuges mit formgebender Oberfläche, die vorzugsweise strukturiert ist und eine hohe Gefügehomogenität besitzt.

Die Erfindung betrifft ferner ein endkonturnahes Formgebungswerkezug mit formgebender, vorzugsweise strukturierter Oberfläche und vorzugsweise hoher Gefügehomogenität.

Bei der Formgebung von Glas oder Kunststoff im plastischen Zustand werden Formgebungswerkzeuge, typischerweise mit vorgegebenen Strukturen in der Oberfläche, benötigt, die dem Negativ der im Glas bzw. Kunststoff zu erzeugenden Strukturen entsprechen. Diese Formgebungswerkzeuge sind typischerweise Preß- und Walzenformen. Dabei können die zu erzeugenden Strukturen bis hin zum µm-Bereich gehen, z.B. bei der Heißformgebung von sogenannten Kanalplatten für Flachbildschirme moderner TV-Geräte.

Zur Erzielung von endkonturnahen Formgebungsverfahren werden derzeit typischerweise gießtechnische Verfahren eingesetzt, bei denen technologiebedingt die erzielbare Gefügehomogenität begrenzt ist. An Formgebungswerkzeuge werden jedoch bei verschiedenen Herstellungsprozessen, z.B. bei der Heißformgebung von Glassubstraten, neben der chemischen Zusammensetzung auch an die Gefügestruktur hohe Anforderungen gestellt. Gefügeinhomogenitäten, die aufgrund der gießtechnischen Bedingungen, z.B. Poren, Ausscheidungen, unterschiedliche Korngrößen, Steigerungen, Texturen, zustande kommen, können sich dabei mit Nachteil während der Formgebung in das Substrat abbilden.

Formwerkzeuge mit hohen Gefügeanforderungen werden deshalb typischerweise geschmiedet, da dadurch deutlich bessere Gefügehomogenitäten erzeugt werden.

Ein weiteres Verfahren, um hohe Gefügehomogenitäten zu gewährleisten besteht darin, Blöcke durch einen HIP-Prozeß zu fertigen. Bei einem Hip-Prozeß (Heiß-Isostatisches-Pressen) werden Werkstoffe in eine Blechkonstruktion eingekapselt und diese vakuumdicht verschlossen. Anschließend entsteht aufgrund hoher Drücke und Temperaturen der Basis-Block für das herzustellende Formgebungswerkzeug. Ein Beispiel für mögliche Werkstoffkombinationen ist die Kombination "Fest-Pulver". Das bedeutet, ein Trägerwerkstoff wird in der gewünschten Form (Kontur) bearbeitet und es wird danach eine Kapsel mit Zwischenraum über diesen Körper gezogen. Der Zwischenraum wird danach mit Pulver gefüllt. Beim HIP-Vorgang sintert dann das Pulver zusammen und verbindet sich unter Bildung einer Diffusionszone mit dem Trägerwerkstoff.

Bei dem Hip-Prozeß wird ausgehend von kleinen Pulvergrößen bis zu nm Größen und dem Sintern ohne Schmelzphase eine äußerst gute Gefügestruktur erzielt.

Der Nachteil dieser beiden Herstellungswege, um hohe Gefügehomogenitäten zu erzielen, besteht darin, daß aus den zunächst bereitgestellten Blöcken bzw. Rundmaterialien Endkonturen nachträglich mechanisch hergestellt werden müssen. Dies ist vor allem bei verschleiß- und korrosionsbeständigen Werkstoffen, wie z.B. Keramiken, Hochtemperaturlegierungen, mit erheblichem Aufwand verbunden. Zudem sind auf diesen Werkzeugoberflächen Strukturen im µm-Bereich, z.B. aufgrund harter Karbideinschlüsse, derzeit nicht kostengünstig herstellbar.

Der Erfindung liegt die Aufgabe zugrunde, das eingangs bezeichnete Verfahren so zu führen, daß die Formgebungswerkzeuge zum einen endkonturnah, sowohl bezüglich der geometrischen Form (Kontur) als auch der Oberflächengüte wie Rauhigkeit, Strukturierung, und zum anderen mit hoher Gefügehomogenität mit deutlich geringerem Bearbeitungsaufwand als beim Stand der Technik herzustellen sind.

Die Lösung dieser Aufgabe gelingt ausgehend von dem eingangs bezeichneten Verfahren zur Herstellung eines endkonturnahen Formgebungswerkzeuges mit formgebender strukturierter Oberfläche und hoher Gefügehomogenität mit den Schritten:
- Herstellen einer Form aus Glas oder Kunststoff, in die das Negativ der formgebenden Struktur des Formgebungswerkzeuges mit vorgehaltenen Aufmaßen eingearbeitet wird mit einer Oberflächengüte, wie sie an die formgebende Oberfläche des Formgebungswerkzeuges gestellt wird,
- Beschichten der Negativform mit mindestens einem Werkstoff, wie er für die formgebende Oberfläche des Formgebungswerkzeuges spezifiziert ist,
- Ablösen des so erzeugten, an einer Fläche strukturierten Schichtkörpers von der Negativform, und
- Verbinden des Schichtkörpers mit seiner nichtstrukturierten Fläche mit einem Basiskörper zur formgebenden strukturierten Oberfläche des Formgebungswerkzeuges.

Mit diesem erfindungsgemäßen Verfahren können mit relativ kostengünstigen Bearbeitungsmaßnahmen Formgebungswerkzeuge endkonturnah sowohl bzgl. der geometrischen Form als auch der Oberflächengüte, insbesondere der Rauhigkeit und Strukturierung, hergestellt werden. Gleichzeitig werden die geforderten homogenen Gefügeeigenschaften erzielt.

Neben der äußerst großen Auswahl von Materialzusammensetzungen - neben metallischen Materialien sind auch keramische Werkstoffe verarbeitbar - können mit diesem Verfahren auch Schichtsysteme bzw. Gradientenwerkstoffe bereitgestellt sowie 3D-Strukturen, bis hin zum µm-Bereich, auf der Werkzeugoberfläche erzeugt werden.

Diese Vorteile werden insbesondere dann erzielt, wenn das Beschichten der Negativform mit der Technologie des thermischen Spritzens erfolgt, wobei auch andere Beschichtungs-Technologien anwendbar sind.

Gemäß einer Weiterbildung der Erfindung wird ein Verfahren angewendet, bei dem die Negativform durch Strukturierung eines Kunststoffkörpers mittels der Technik der Lithographie hergestellt wird.

Alternativ dazu kann ein Verfahren zur Anwendung kommen, bei dem die Negativform durch Strukturierung eines Glas- oder Kunststoffkörpers mit mechanischen Verfahren oder mit Verfahren des thermischen Wirkprinzipes hergestellt wird.

Das Thermische Spritzen erfolgt gemäß einer ersten Ausgestaltung der Erfindung vorzugsweise durch das Verfahren des Flammspritzens, insbesondere durch das HVOF-Verfahren. Dieses Verfahren ermöglicht einen Schichtaufbau mit hoher Gefügehomogenität.

Dieser Vorteil ist auch dann gegeben, wenn gemäß einer zweiten Weiterbildung der Erfindung das Thermische Spritzen durch das Verfahren des Plasmaspritzens erfolgt, insbesondere durch das VPS- oder LPPS-Verfahren. Diese Verfahren haben den zusätzlichen Vorteil, daß eine große Bandbreite von Werkstoffen, insbesondere auch Hartlegierungen und Hartstoffe, wie Karbide, verspritzt werden können.

Vorgenannte Verfahren ermöglichen es zudem, daß gemäß einer Weiterbildung der Erfindung sowohl einphasige Werkstoffe als auch Werkstoffkombinationen, wie Schichtsysteme oder Gradientenwerkstoffe, aufgespritzt werden können. Dadurch ist es auf einfache Weise möglich, den Werkstoff für die formgebende, strukturierte Oberfläche des Formgebungswerkzeuges dem jeweiligen Anwendungszweck anzupassen.

Die vorgenannten Verfahren ermöglichen es auch, vorgegebene Schichtdicken auf der Negativform aufzubringen, wobei die Schichtdicke maßgebend davon bestimmt wird, wie der von der Negativform abgelöste Schichtkörper mit dem Trägerwerkstoff des Formgebungswerkzeuges verbunden wird.

Beträgt die Schichtdicke gemäß einer ersten Ausgestaltung 100 µm bis 5 mm, dann wird die Herstellung des Formgebungskörpers vorzugsweise in der Weise durchgeführt, daß der von der Negativform abgelöste Schichtkörper als Teil einer HIP-Kapsel mit einem anderen Werkstoff durch einen HIP-Prozeß zu dem Formwerkzeug verbunden wird. Diese Methode gewährleistet einen dauerhaften innigen Werkstoffverbund zwischen dem separat hergestellten strukturierten Schichtkörper und dem Basis- bzw. Trägerwerkstoff des Formgebungswerkzeuges.

Ist die Schichtdicke genügend groß, bis hin zu 20 mm, dann kann der Schichtkörper direkt als formgebende Oberfläche des Formgebungswerkzeuges verwendet werden, indem der von der Negativform abgelöste Schichtkörper mit einen Basiskörper zu dem Formgebungswerkzeug mechanisch kombiniert wird.

Bei großen Schichtdicken kann dabei eine zunächst durch Thermisches Spritzen erzeugte Schicht durch Auftragsschweißen verstärkt werden, was die Herstellung der dicken Schicht beschleunigt.

Hinsichtlich des eingangs bezeichneten endkonturnahen Formgebungswerkzeuges mit formgebender, strukturierter Oberfläche und hoher Gefügehomogenität wird die vorbeschriebene Aufgabe erfindungsgemäß dadurch gelöst, daß die formgebende, strukturierte Oberfläche durch einen durch Thermisches Spritzen separat erzeugten Schichtkörper gebildet ist, der mit einem Trägerwerkstoff des Formgebungswerkzeuges verbunden ist.

Dabei kann das Formgebungswerkezug so aufgebaut sei, daß der separat erzeugte Schichtkörper eine Dicke von bis zu 20 mm aufweist und mechanisch mit dem Trägerwerkstoff verbunden ist, oder so, daß der separat erzeugte Schichtkörper eine Dicke von 500 µm - 5 mm aufweist und Teil einer HIP-Kapsel ist, der mittels eines HIP-Prozesses mit dem Basiswerkstoff verbunden ist.

Anhand von zwei in der Zeichnung dargestellten Ausführungsbeispielen wird die Erfindung näher beschrieben.

Es zeigen:
- Figur 1: in einer schematischen Längsschnitt-Darstellung eine als Vorlage dienende Form, in die das Negativ der Struktur des späteren Formgebungswerkzeuges eingearbeitet ist,
- Figur 2: die Erzeugung eines Schichtkörpers aus einem vorgegebenen Werkstoff auf der Form nach Figur 1 durch die Technologie des Thermischen Spritzens,
- Figur 3: die mechanische Verbindung des von der Form abgelösten Schichtkörpers mit einem Basiskörper des Formgebungswerkzeuges, und
- Figur 4: die Verbindung des von der Form abgelösten Schichtkörpers als Teil einer HIP-Kapsel über einen HIP-Prozeß mit dem Basis- bzw. Trägerwerkstoff des Formgebungswerkzeuges.

In den Figuren der Patentzeichnung ist das erfindungsgemäße Verfahren zur Herstellung eines endkonturnahen Formgebungswerkzeuges mit formgebender, strukturierter Oberfläche, das eine sehr hohe Gefügehomogenität der strukturgebenden Oberfläche des Formgebungswerkzeuges gewährleistet, schematisch darstellt.

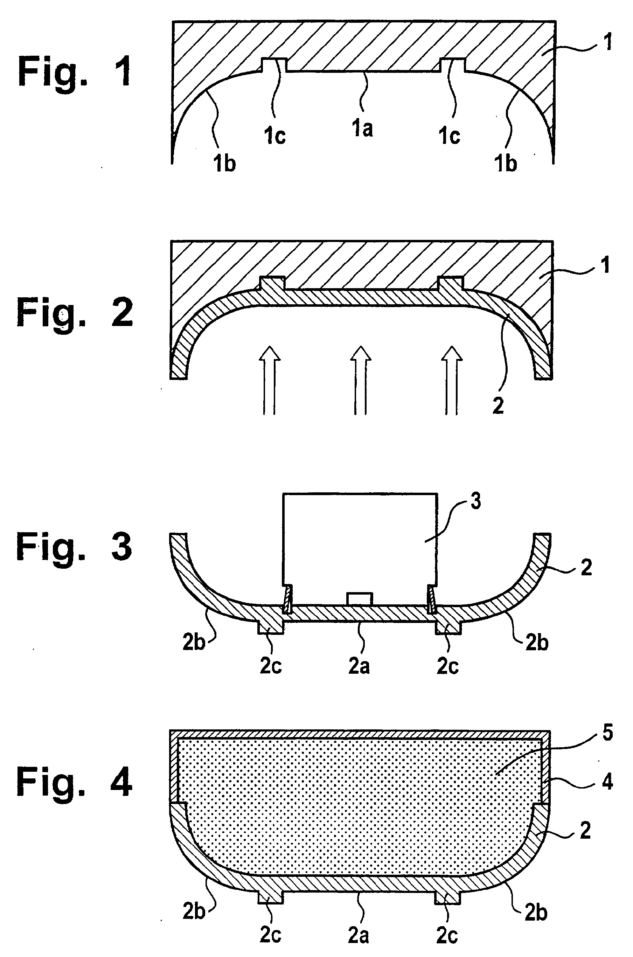

Im ersten Verfahrensschritt gemäß Figur 1 wird eine Vorlage 1, d.h. eine Negativform der strukturierten Oberflächenkontur des herzustellenden Formgebungswerkzeuges erstellt. In der Figur 1 ist dabei zwecks einfacher Darstellung nur eine relativ einfache Struktur mit einem linearen Abschnitt 1a und zwei gebogenen Abschnitten 1b und zwei Kavitäten lc dargestellt.

Im konkreten Fall richtet sich die Negativstruktur nach der im jeweiligen Anwendungsfall geforderten Oberflächenstruktur des jeweiligen Formgebungswerkzeuges. Die Abmessungen der Negativstruktur in der Vorlage 1 müssen dabei auch die Aufmaße vorhalten, die vom späteren, vom Formgebungswerkzeug durchzuführenden Verformungsprozeß abhängig sind. Beispielsweise werden bei der Heißformgebung aufgrund der unvermeidlichen thermischen Längenausdehnung die Abmessungen der Oberflächenstrukturen des Formgebungswerkzeuges verändert, was durch einen entsprechenden Vorhalt in der Negativ-Struktur nach Figur 1 berücksichtigt werden muß.

Die Herstellung der Negativform 1 kann auf verschiedene Weise erfolgen. Ein Weg ist das sog. Prototyping. Bei dieser Methode wird mittels der Technik der Lithographie (Maskentechnik in Verbindung mit Photolack) aus einem Kunststoffkörper die Negativform mit gewünschter, von der Maske vorgegebener geometrischer Kontur/Struktur hergestellt, unter Gewährleistung der notwendigen Oberflächengüte. Diese lithographischen Verfahren sind grundsätzlich bekannt und brauchen daher hier nicht näher erläutert zu werden.

Ein anderer Weg besteht darin, einen Glas- oder Kunststoff-Grundkörper mit mechanischen Verfahren wie Schleifen, Sandstrahlen, Zerspanen oder mit Verfahren nach dem thermischen Wirkprinzip wie Erosion oder Laserstrahlbearbeitung, so zu strukturieren, daß dieser Grundkörper die Negativstruktur des Formgebungswerkzeuges aufweist.

Im nächsten, in Figur 2 dargestellten Verfahrensschritt wird die Negativform 1, vorzugsweise mittels der Technologie des "Thermischen Spritzens", beschichtet, angedeutet durch die Pfeile, bis eine Schicht 2 vorgegebener Stärke (Dicke) entstanden ist.

Thermische Spritzverfahren umfassen in bekannter Weise das Flammspritzen, das Lichtbogenspritzen, das Plasmaspritzen und Sonderspritzverfahren wie Detonations-Beschichten und Kondensator-Spritzverfahren. Auch diese Verfahren sind grundsätzlich bekannt und brauchen daher hier nicht näher beschrieben zu werden. Für den vorliegenden Anwendungsfall ist dabei das Plasmaspritzen von besonderer Bedeutung, weil es von allen Verfahren die hochwertigsten Beschichtungen, insbesondere auch hinsichtlich der Gefügehomogenität liefert und weil es die Verarbeitung hochschmelzender metallischer und keramischer Werkstoffe erlaubt, wie sie insbesondere bei der Strukturierung von Glas wegen der notwendigen Hitze- und Korrosionsbeständigkeit bzw. der notwendigen Verschleißfestigkeit benötigt werden. Zu diesen Werkstoffen zählen insbesondere Legierungen auf Nickel/Chrom- und Kobalt-Basis und Karbide.

Beim Flammspritzen hat dabei das sog. HVOF-Verfahren (High Velocity Oxid Fuel Flame Spraying) und beim Plasmaspritzen das sog. VPS-Verfahren (Vacuum Plasma Spraying) oder das LPPS-Verfahren (Low Pressure Plasma Spraying) eine besondere Bedeutung erlangt. Gerade bei diesen Verfahren können sehr geringe Porositäten und hohe Gefügehomogenitäten erreicht werden.

Die Wirksamkeit der Verfahren des Thermischen Spritzens hängt in bekannter Weise maßgebend von den Parametern während der Beschichtung, hier der Negativform 1, ab. Solche Parameter sind beispielsweise die Trägergaszufuhr, der Abstand der Brennerdüse von der Negativform, die Temperaturführung, usw.. Sie variieren in Abhängigkeit vom zu verspritzenden Material und der gewünschten Geometrie der Negativform. Sie werden im Einzelfall durch den zuständigen Fachmann vorgegeben.

Am Ende des Verfahrensschritts des Thermischen Spritzens ist auf der Negativform 1 eine Schicht 2 aus einem vorgegebenen Werkstoff mit vorgegebener Dicke aufgebracht, die an der Kontaktfläche zur Negativform die endkonturnahe Form bezüglich Geometrie und Oberflächengüte besitzt und eine hohe Gefügehomogenität aufweist.

Zur Herstellung des Formgebungswerkzeuges wird diese Schicht 2 von der Negativform 1 entfernt, wobei das Ablösen durch eine entsprechende Vorbehandlung der zu beschichtenden Oberfläche der Negativform 1 vor deren Beschichtung erleichtert werden kann.

Die abgelöste Schicht 2 kann dann auf verschiedene Weise zu der Oerflächenstruktur des Formgebungswerkzeuges verarbeitet werden.

Es besteht zum einen die Möglichkeit, die Beschichtung so dick, ca. 1 - 20 mm, aufzutragen, daß als Schichtkörper die Endform der äußeren Schicht des Formgebungswerkzeuges erzielt wird. Nach dem Ablösen von dem Negativ 2 kann dieser Schichtkörper dann, wie in Figur 3 dargestellt, auf ein Basis-Werkzeug 3, z.B. einen Preßstempel, gespannt werden, um eine mechanische Stabilität zu erzielen.

Eine andere Möglichkeit besteht darin, eine Schicht 2 mit einer Stärke von ca. 1 - 5 mm zu erzeugen, und diese Schicht nach ihrem Ablösen von der Negativform, wie in Figur 4 dargestellt, als Teil einer HIP-Kapsel 4, die mit zu verpressendem Pulver 5, ggf. in Verbindung mit einem eingelagerten festen Körper, befüllt ist, zu verwenden. Die Dicke des einen Teil der HIP-Kapsel bildenden Schichtkörpers 2 sollte dabei größer, vorzugsweise mindestens doppelt so groß sein wie die andere Kapselhälfte. Dadurch wird das Schrumpfen bzw. das Verändern dieser Oberfläche verhindert. Lediglich die Ränder werden durch den HIP-Vorgang verzogen.

Nach Durchführen des eingangs beschriebenen HIP-Prozesses, alternativ auch durch einen Schweißvorgang, steht dann ein das Formgebungswerkzeug bildender Werkstoffverbund zur Verfügung, mit dem Schichtkörper 2 als strukturgebene Oberfläche, die im Wirkkontakt z.B. mit dem Glas- bzw. Kunststoffsubstrat steht und die an der Oberfläche das Negativ der aufzubringenden Struktur besitzt, bestehend aus dem linearen Abschnitt 2a, den beiden gerundeten Abschnitten 2b und der erhabenen Struktur 2c.

Anstelle des Beschichtens mit nur einer Schicht aus einem Werkstoff können auch mehrere Schichten aus verschiedenen Werkstoffen übereinander aufgetragen werden. Auch können mehrere Werkstoffe gleichzeitig verspritzt werden.

Vorzugsweise wird der aufgespritzte Schichtkörper durch einen anschließenden HIP-Prozeß verdichtet.

## Patentansprüche

1. Verfahren zur Herstellung eines endkonturnahen Formgebungswerkzeuges mit formgebender Oberfläche und hoher Gefügehomogenität mit den Schritten:
- Herstellen einer Form (1) aus Glas oder Kunststoff, in die das Negativ der formgebenden Struktur des Formgebungswerkzeuges mit vorgehaltenen Aufmaßen eingearbeitet wird mit einer Oberflächengüte, wie sie an die formgebende Oberfläche des Formgebungswerkzeuges gestellt wird,
- Beschichten der Negativform (1) mit mindestens einem Werkstoff, wie er für die formgebende Oberfläche des Formgebungswerkzeuges spezifiziert ist,
- Ablösen des so erzeugten, an einer Fläche strukturierten Schichtkörpers (2) von der Negativform (1), und
- Verbinden des Schichtkörpers (2) mit seiner nichtstrukturierten Fläche mit einem Basiskörper (3; 4, 5) zur formgebenden strukturierten Oberfläche des Formgebungswerkzeuges.

2. Verfahren nach Anspruch 1, bei dem die Negativform (1) durch Strukturierung eines Kunststoffkörpers mittels der Technik der Lithographie hergestellt wird.

3. Verfahren nach Anspruch 1, bei dem die Negativform (1) durch Strukturierung eines Glas- oder Kunststoffkörpers mit mechanischen Verfahren oder mit Verfahren des thermischen Wirkprinzipes hergestellt wird.

4. Verfahren nach einem der Ansprüche 1 bis 3, bei dem das Beschichten der Negativform mit der Technologie des Thermischen Spritzens erfolgt.

5. Verfahren nach Anspruch 4, bei dem das Thermische Spritzen durch das Verfahren des Flammspritzens erfolgt.

6. Verfahren nach Anspruch 5, bei dem das Flammspritzen durch das HVOF-Verfahren durchgeführt wird.

7. Verfahren nach einem der Ansprüche 4 bis 6, bei dem das Thermische Spritzen durch das Verfahren des Plasmaspritzens erfolgt.

8. Verfahren nach Anspruch 7, bei das Plasmaspritzen durch das VPS-oder LPPS-Verfahren durchgeführt wird.

9. Verfahren nach einem der Ansprüche 1 bis 8, bei dem einphasige Werkstoffe oder Werkstoffkombinationen wie Schichtsysteme oder Gradienten-Werkstoffe aufgespritzt werden.

10. Verfahren nach einem der Ansprüche 1 bis 9, bei dem eine Schichtdicke von 100 µm - 5 mm erzeugt wird.

11. Verfahren nach einem der Ansprüche 1 bis 9, bei dem eine Schichtdicke von bis zu 20 mm erzeugt wird.

12. Verfahren nach Anspruch 11, bei dem zunächst eine Schicht durch Thermisches Spritzen erzeugt wird, die mit nachträglichem Auftragsschweißen verstärkt wird.

13. Verfahren nach einem der Ansprüche 1 bis 12, bei dem der von der Negativform (1) abgelöste Schichtkörper (2) mit einem Basiskörper (3) zu dem Formwerkzeug mechanisch kombiniert wird.

14. Verfahren nach einem der Ansprüche 1 bis 12, bei dem der von der Negativform (1) abgelöste Schichtkörper (2) als Teil einer HIP-Kapsel (4) mit einem anderen Werkstoff durch einen HIP-Prozeß zu dem Formwerkzeug verbunden wird.

15. Endkonturnahes Formgebungswerkzeug mit formgebender, vorzugsweise strukturierter Oberfläche und vorzugsweise hoher Gefügehomogenität, **dadurch gekennzeichnet, daß** die formgebende, vorzugsweise strukturierte Oberfläche durch einen separat erzeugten Schichtkörper (2) gebildet ist, der mit einem Trägerwerkstoff (3; 4, 5) des Formgebungswerkzeuges verbunden ist.

16. Formgebungswerkzeug nach Anspruch 15, bei dem der separat erzeugte Schichtkörper (2) eine Dicke von bis zu 20 mm aufweist und mechanisch mit dem Trägerwerkstoff verbunden ist.

17. Formgebungswerkzeug nach Anspruch 15, bei dem der separat erzeugte Schichtkörper (2) eine Dicke von 100 ,um - 5 mm aufweist und Teil einer HIP-Kapsel (4) ist, der mittels eines HIP-Prozesses oder durch Schweißen mit dem Basiswerkstoff (9) verbunden ist.

18. Formgebungswerkzeug nach einem der Ansprüche 15 bis 17, bei dem der Schichtkörper durch Thermisches Spritzen gebildet ist.
